# EUROPEAN PATENT APPLICATION

(11) **EP 1 387 551 A1**
(43) Date of publication of application: **04.02.2004**
(21) Application number: 03250672.7
(22) Date of filing: 03.02.2003
(51) Int. Cl.: H04L 29/06, H04L 12/58, G06F 1/00

(54) **Electronic sealing for electronic transactions**

(30) Priority: 30.07.2002 GB 0217610
(71) Applicant: Security and Standards Limited, Chelmsford, Essex CM2 0LG (GB)
(72) Inventor: Pope, Nicholas Henry, Billericay (GB); Ross, John Gordon, Chelmsford (GB)
(74) Representative: Jehan, Robert

(57) **Abstract**

A sealing method and system based on any data originator authentication mechanism involves an originator (10) which represents the entity requiring the data to be sealed and to have itself identified as the originator of the sealed data. The relying party (12) is an entity requiring to use the sealed data as proof relating to a transaction. The seal provider (14) is an entity trusted to provide seals by the originator and relying parties. The procedure for creating a seal is as follows: the originator (10) creates a hash value or other one-way representation of the data to be sealed. The originator (10) then sends the hash value with a seal request through a secure channel which authenticates the originator (10) to the seal provider (14) and ensures the integrity of the request. The seal provider (14) then determines if the authentication of the request is correct and, if so, creates a seal which contains an identifier for the originator (10), the time of the request, the hash value and a digital signature or other similar mechanism which authenticates the data unit as coming from the seal provider (14). The preferred form of digital signature is one using public key cryptography such as specified in ITU-T X.509 or Internet RFC 2560.

## Description

The present invention relates to an electronic sealing method and to an electronic registration method for use in electronic transactions.

Existing electronic signature methods are commonly based on use of public/private key (asymmetric) cryptography to create a digital signature supported by electronic certificates (e.g. as defined in ITU-T X.509). This requires use of certificate status methods such as Certificate Revocation Lists (as defined in ITU-T X.509) or on-line certificate status checking (as defined in Internet RFC 2560) to ensure the validity of certified key (revoked or not). As the validity of the certified key used to create a digital signature may change over time, it is often considered necessary to know the time at which the signature was created. This can be achieved by applying a secure time-stamp method (Internet RFC 3161, US patent RE 34,954) over the digital signature (ETSI TS 101 733).

Secure time-stamping methods (Internet RFC 3161; US patent RE 34,954) can also be used on their own (without the digital signature of the originator) to provide integrity of transaction data and proof of transaction time. This does not, however, provide any proof of the originator.

These electronic signature methods have two major disadvantages. First, it can be difficult to gain assurance of the validity of the public key used to verify the digital signature (that is the signature verification key). When verifying a signature the relying party needs to obtain information on the status of certificate used to validate the signing key. This can involve a significant overhead in obtaining the appropriate (revocation) status information. It can be particularly difficult, if not impossible, to get this status information as it applied when the signature was created when there is a significant period between the creation of the signature and its verification (as in the case of a subsequent dispute over a transaction).

Secondly, the certificate, which relates a name to a signing key, is often created by a party which is not directly involved with the business using that certificate. As the subject of the certificate is not already "known" to the authority issuing the certificate (the certification authority), there can be difficulty in checking the subject's name. This can result in significant additional costs and also increases the probability of errors.

The present invention seeks to provide an electronic sealing and an electronic registration method for use in electronic transactions.

According to an aspect of the present invention, there is provided a sealing method for sealing the details of an electronic transaction including the step of obtaining authentication information from an originator, checking the validity of that originator's authentication at the time of the transaction and creating a sealed record related to the transaction and validity of the originator's authentication information.

Preferably, the sealed record includes details of the originator of transaction data and the time of the transaction and thereby proves the integrity of the transaction data. The seal is preferably digitally signed by a trusted seal provider. In the preferred embodiment, the transaction data itself is not revealed to the seal provider enhancing its confidentiality. The seal may include other information relating to a transaction originator such as a copy of originator's public key certified by the seal provider.

The method advantageously forms an electronic signature having non-repudiation properties. The method may use any data originator authentication mechanism or more specific form of originator authentication using digital signatures based on public key cryptography.

The preferred sealing method overcomes the first disadvantage mentioned above by checking the validity of originator's authentication information (for example signing key) at the time of the transaction. The registration method overcomes the second disadvantage mentioned above by involving a party involved in the business functions in the registration process.

The invention also provides a sealing method for sealing the details of an electronic transaction or data including the step of obtaining authentication information from an originator, obtaining an identification of the originator at the time of sealing and creating a sealed record related to the transaction or data and validity of the originator's identification.

In the preferred embodiment, a one-way mathematical function of the transaction data, and not the data itself, is revealed to the seal provider. This may be used to ensure that the seal applies to the data in its original form.

Embodiments of the present invention are described below, by way of example only, with reference to the accompanying drawings, in which:
Figure 1 shows an embodiment of sealing method using any originator authentication mechanism;
Figure 2a shows an embodiment of sealing method based on originator digital signatures;
Figure 2b shows an embodiment of sealing method incorporating a certified copy of the originator's public key;
Figure 3 shows an embodiment of sealing method for email transactions;
Figure 4 shows an embodiment of sealing method providing a transaction peer;
Figure 5 shows a modification to the embodiment of sealing method of Figure 4;
Figure 6 shows an embodiment of sealed registration method and in particular an originator set-up stage;
Figure 7 shows the steps of a routine for creating a sealed registration document;
Figure 8 shows a example of how a sealed document may be encoded as a text string;
Figure 9 shows a example of how a sealed document may be displayed; and
Figure 10 shows the steps of how a trusted agent may be used to validate a seal.

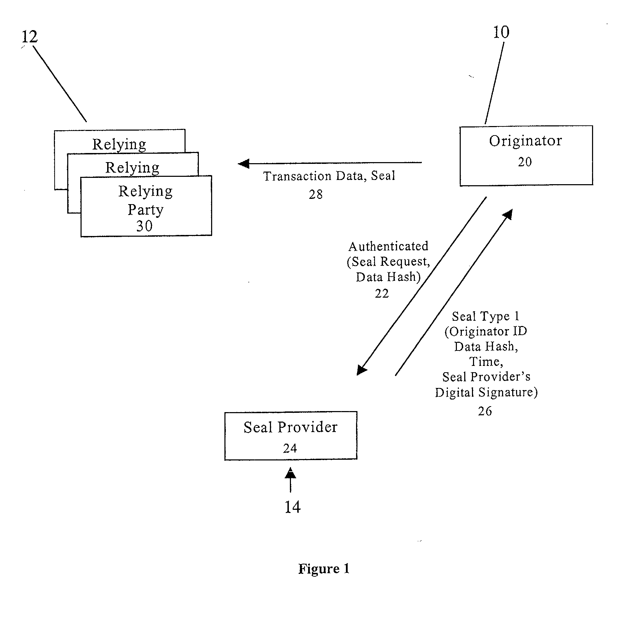

Referring to Figure 1, there is shown an embodiment of sealing method which is based on any data originator authentication mechanism. The scenario depicted in Figure 1 involves an originator 10 which represents the entity requiring the data to be sealed and to have itself identified as the originator of the sealed data. The relying party 12 (of which there may be more than one) is an entity requiring to use the sealed data as proof relating to a transaction. This may, for example, include the recipient of the transaction data, an arbitrator or judge in a dispute or even the originator.

The seal provider 14 is an entity trusted to provide seals by the originator and relying parties. The seal provider 14 can be a system operated by any suitable organisation, such a business specialising in the provision of security services, trade organisation or any other suitable organisation.

In this embodiment and scenario depicted in Figure 1, the procedure for creating a seal is as follows. In the first instance, at step 20, the originator 10 creates a hash value (for example, the secure hash algorithm SHA1 defined in FIPS 180-1) or other one-way representation of the data to be sealed (typically the transaction data). At step 22 the originator 10 sends the hash value with a seal request through a secure channel which authenticates the originator 10 to the seal provider 14 and ensures the integrity of the request.

At step 24, the seal provider determines if the authentication and integrity of the request are correct. If so, the seal provider 14 creates a data unit, conveniently referred to in this description as a seal, which, in this embodiment, contains an identifier for the originator 10, the time of the request, the hash value and a digital signature or other similar mechanism which authenticates the data unit as coming from the seal provider 14. The preferred form of digital signature is one using public key cryptography such as specified in ITU-T X.509 or Internet RFC 2560. The seal provider 14 may also copy the data forming the seal into an audit log file to provide an additional mechanism for assuring the validity of the transaction.

At step 26, the seal is returned to the originator 10. At step 28, the transaction data with its seal is passed to each relying party 12, either directly or indirectly.

At step 30, any relying party 12 which trusts the seal provider 14 can verify the seal and the integrity of the transaction data to which the seal is applied by verifying the digital signature in the seal. Thus, the relying party 12 is provided with proof of the originator of the transaction data, the time of transaction and the integrity of the transaction data.

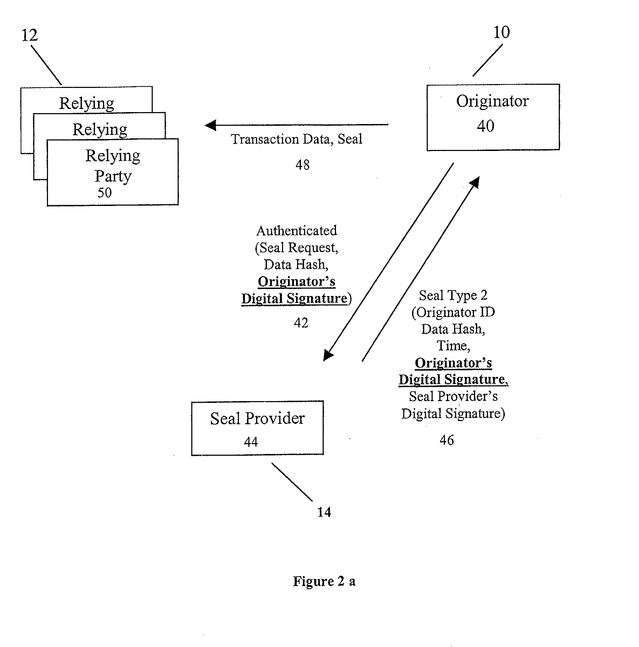

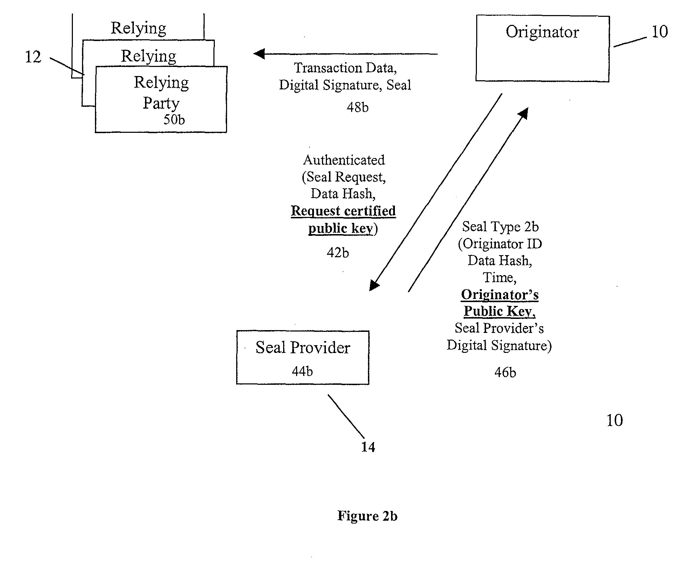

Figure 2 shows an embodiment of sealing method which is based on a digital signature from the originator and still provides the scenario of one originator 10, one or more relying parties 12 and a seal provider 14.

In this scenario, the preferred procedure for creating a seal involves the following steps. At step 40 the originator 10 digitally signs a transaction data and creates a hash value or other one-way representation of that transaction data. At step 42 the originator 10 sends the hash value and the digital signature(s), with a seal request, through a secure channel which authenticates the originator 10 to the seal provider 14 and ensures the integrity of the request. In this embodiment, the request need not necessarily be authenticated. If the request is not authenticated, the digital signature is used to authenticate the originator 10. Other parties may later submit the signed data for sealing but the seal with the earliest time can be taken as the one representing the time of the original transaction.

At step 44 the seal provider 14 determines whether the authentication and integrity of the request is correct and also whether the digital signature is currently valid, using the signature verification key of the originator 10. If this is the case, the seal provider 14 creates a data unit called a seal which, in this example, contains: an identifier for the originator 10, the time of the request, the hash value, the digital signature provided by the originator 10, and at least one digital signature or other similar mechanism which authenticates the data unit as coming from the seal provider 14. The seal provider 14 may also copy the data forming the seal into an audit log file to provide an additional mechanism of assuring the validity of the transaction.

At step 46 the seal is returned to the originator 10. At step 48 the transaction data with its seal is passed to each relying party 12.

At step 50, any relying party 12 which trusts the seal provider 14 can verify the seal and the integrity of the transaction data to which the seal is applied by verifying the digital signature(s) in the seal. Thus, each relying party 12 is provided with proof of the originator 10 of the transaction data, the time of transaction, the integrity of the transaction data and the validity of the digital signature which the originator 10 applied to the transaction data at that given time. In this embodiment, as is depicted in Figure 2a, two digital signatures may be provided, the originator's digital signature and the seal provider's digital signature.

A variation for the sealing method based on digital signatures, as shown in Figure 2b, is one providing a public key that is certified by the sealing authority as being valid at the time of the transaction. In this variation, the originator 10 includes a request for its public key be certified in the seal request 42b to the seal provider 14. The seal provider checks that the originator's public key is valid 44b, for example by checking the validity period in the originator's current X.509 identity certificate and the revocation status of that certificate. If the originator's public key is valid then this is included in the seal certifying the validity of the key at the time of the transaction 46b. The originator sends this seal along with the digital signature to the relying party 48b. The relying party verifies the digital signature using the public key in the seal 50b that the sealing authority certifies as being valid at the time of the transaction.

This form of seal (i.e. one including the public key) may be used as an alternative a public key certificate (such as defined in X.509) with the validity only for a specific transaction (i.e. a transaction certificate). Furthermore, a seal may be used as a "qualified certificate" meeting the requirements identified in the European Directive 1999/93/EC on a "Community framework for electronic signatures" as described in the following table.

| EU Electronic Signature Directive 1999/93/EC - Annex I Requirement on Qualified Certificate Content | Qualified Seal |
|---|---|
| (a) an indication that the certificate is issued as a qualified certificate; | Additional transaction attribute indicating that the seal is a form of qualified certificate; |
| (b) the identification of the certification-service-provider and the State in which it is established; | Already identified through the Sealing Authority certificate. This could be repeated as in an additional transaction attribute. |
| (c) the name of the signatory or a pseudonym, which shall be identified as such; | Already included in user name. |
| (d) provision for a specific attribute of the signatory to be included if relevant, depending on the purpose for which the certificate is intended; | Additional transaction attribute |
| (e) signature-verification data which correspond to signature-creation data under the control of the signatory; | Additional transaction attribute containing user public key |
| (f) an indication of the beginning and end of the period of validity of the certificate; | Validity period is for a single transaction at the time already given in the time-stamp. |
| (g) the identity code of the certificate; | Already in time-stamp serial number |
| (h) the advanced electronic signature of the certification-service-provider issuing it; | Already in the time-stamp signature |
| (i) limitations on the scope of use of the certificate, if applicable; and | Additional transaction attribute |
| (j) limits on the value of transactions for which the certificate can be used, if applicable. | Additional transaction attribute |

This further enhanced seal, which is called herein a "qualified seal", has additional advantages over an X.509 based certificate in that:
1) This qualified seal may be used to provide an electronic signature that under the European Directive 1999/93/EC article 5.1 "satisfy the legal requirements of a signature in relation to data in electronic form in the same manner as a hand-written signature satisfies those requirements in relation to paper-based data".
2) A user who already has conventional X.509 certificate, which does not meet the above legal requirements, can use that certificate to obtain a "qualified seal", which does meet these requirements.
3) As the "qualified seal" is valid only for a particular transaction uncertainty over the validity of the certificate as the time of the transaction is minimised.
4) As the "qualified seal" applies to a single transaction the issuing authority has much greater control over its liability.

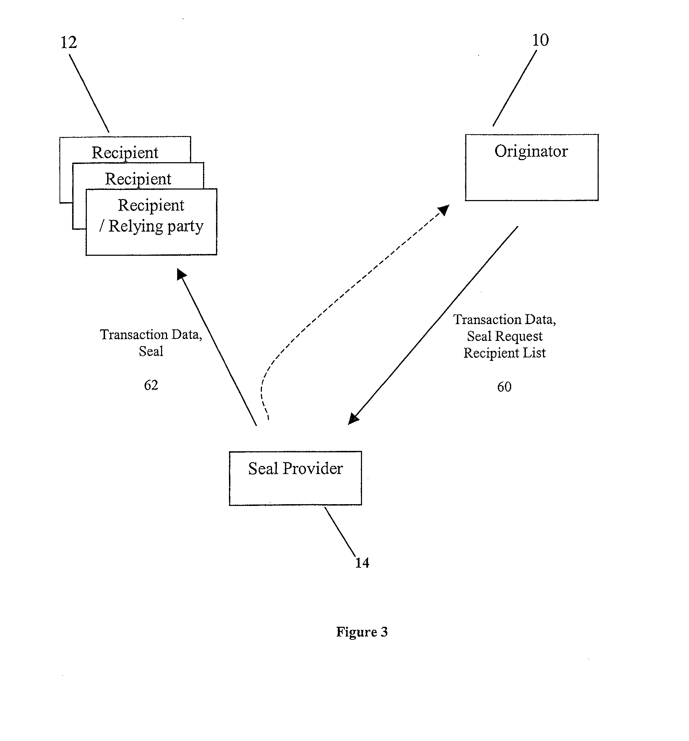

A variation to the sealing methods described above with respect to Figures 1, 2a and 2b is shown in Figure 3 and, in this example, relates to email transaction environments.

As illustrated in Figure 3, a seal request is passed to the seal provider 14 at step 60, which is then to be subsequently forwarded to the recipient(s) 12 identified in the recipient list. The transaction data is passed to the seal provider 14 together with the seal request and then is forwarded, at step 62, with the resulting seal to the identified recipient(s) 12.

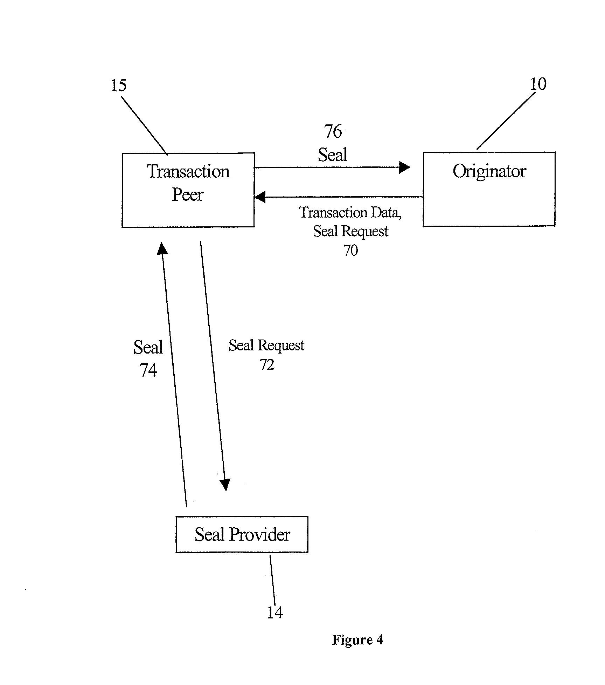

Figure 4 shows another scenario of sealing method for use with transaction peers. As illustrated in Figure 4, at step 70 a seal request from the originator 10 is passed through the peer 15 with whom the originator 10 is carrying out the transaction. The seal request is passed, at step 72, to the seal provider 14 only if the transaction peer 15 agrees with the transaction. At step 74 the seal is returned by the seal provider 14 to the transaction peer 15 and subsequently, at step 76, passed to the originator 10.

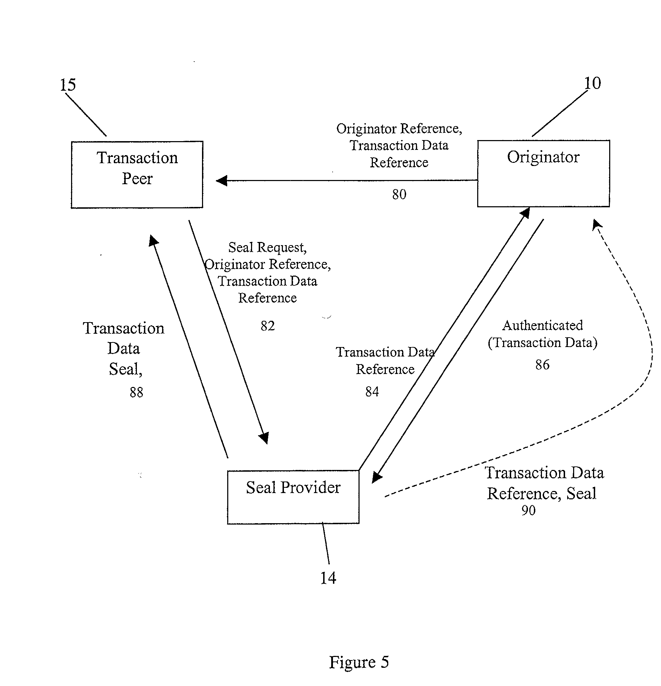

Figure 5 shows another scenario of sealing method for with transaction passing through the seal provider. As illustrated in Figure 5, at step 80 references to the originator and transaction data (for example a universal Resource Identifier, see Internet RFC 2396) is passed from the originator 10 to the transaction peer 15. The preferred form of the reference to the transaction data is that the reference value is unpredictable, to avoid unauthorised access to the transaction data. The transaction peer 15 then sends these references to the seal provider 14 at step 82. The seal provider 14 then requests the transaction data from the originator 10 at step 84, which returns with the transaction data through a secure channel which authenticates the originator 10 at step 86. The seal provider 14 then creates the seal which it passes, along with the transaction data, to the transaction peer 15 at step 88. The seal may also be sent back to the originator 10, with the reference to the transaction data, at step 90.

The preferred embodiments of seal registration methods provide two forms of identification, the first being a security system identifier and the second being a business identifier.

The preferred seal registration method is a technique for securely binding a security system identifier to a business identifier.

The security system identifier is allocated and authenticated by a security system, such as one of the implementations of sealing method described above. When allocated, this identifier is unrelated to any "real world" identification but can be used with a security system for identification purposes. A security system identifier may, for example, be a number pair allocated by a seal provider 14 to an originator of sealed data. One number of the number pair identifies a community of users, the other number identifies the user within the community. The number pair is unique within the set of identifiers allocated by the seal provider.

The business identifier provides a set of attributes used by the business to identify an entity (such as a customer) for the purposes of transacting business therewith. This may include, for example, references used within the business (such as a customer reference number) and/or information used to identify the entity more generally (such as the customer's name and home address). The business identifier is agreed between the subject and a registration authority. Some attributes may be allocated by the registration authority (for example, customer number), others may be provided by the subject (for example, first name, surname and address). The registration would either be a system operated by or on behalf of the business with which the subject is trading, or the registration authority would be operated by a third party business whose function is to check information concerning the user.

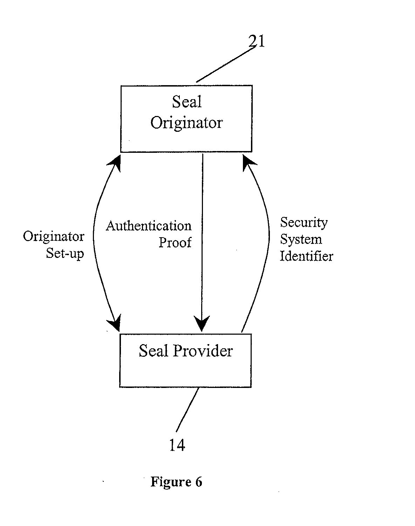

When being set up to use one of the sealing methods described above, a sealed data originator 21 is allocated a security system identifier by a seal provider 14, as shown in Figure 6. Before allocating a security system to the originator identifier, the seal provider proves ownership of some means for authentication. In the embodiment using public key techniques this involves proof of possession of a private signing key.

Having set up two seal originators 21 which are to be parties in a business transaction, such as a business and its customer, a sealed registration document is created. One party (for example the business) acts as a registration authority for the other party (for example, the customer). The customer acts as a subject of the registration. Between them, these two parties create a sealed registration document which binds the subject identifier to the business identifier.

In the preferred embodiment, the sealed registration document is allocated a document reference (for example a Universal Resource Identifier, see Internet RFC 2396) by the registration authority. This registration document reference can later be used in subsequent sealed documents produced by the subject, thereby providing reference to its authenticated business identifier.

In the preferred embodiment, the sealed registration document contains:
(a) the business identifier,
(b) the registration document reference or some other information that may be used to identify the registration for a particular business purpose,
(c) a seal from the subject which includes its security system identifier and which indicates the subject's agreement that the business identifier is correct for itself,
(d) a seal from the registration authority which indicates the registration authority's agreement that the business identifier is correct for the subject which created the seal in step (c) above.

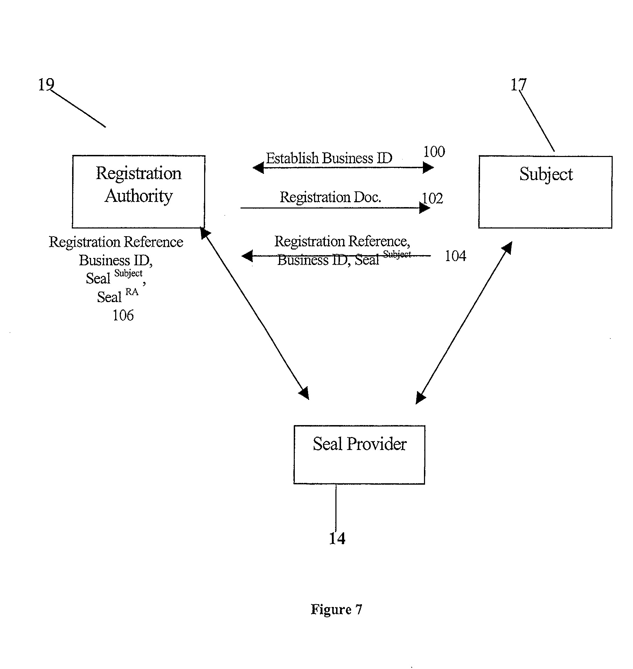

An embodiment of routine for creating such a sealed registration document between a business acting as the registration authority and a customer acting as a subject of the registration is shown in Figure 7.

The procedure of the example of Figure 7 is as follows. At step 100, the subject 17 and the registration authority 19 establish the attributes required for the business identifier of the subject 17, such as name, address, customer identifier and so on.

At step 102, the registration authority 19 allocates the registration a reference (for example a Universal Resource Identifier) which is sent to the subject 17. At step 104, the subject 17 sends to the registration authority 19 a sealed document containing the business identifier and the registration document reference. The seal indicates the entity identified with the security system identifier in the seal and agrees that the business identifier is applicable to itself.

At step 106, if the registration authority 19 has also agreed that the business identifier is applicable to the subject 17 which sent the sealed document, it will add its own seal. This sealed registration document is stored by the registration authority 19 and, if required, also passed to the subject 17 for later use in verifying a claim of identity.

Any sealed document can then include the appropriate registration reference to authenticate the identity of the originator.

The business operating as a registration authority 19 may similarly obtain a sealed registration with the seal provider 14 which, in turn, acts as another registration authority for the business registration authority.

It will be appreciated that the various embodiments described above can be combined with one another, as required in any particular implementation of the systems described herein.

It will also be appreciated that the embodiments described can provide a method of sealing data by a trusted third party to provide independent proof of: the originator, of the transaction data, the time of transaction, and the transaction data. The sealing method produces a form of electronic signature, which has non-repudiation properties and avoids the need for certificate revocation or other authentication status checking. The preferred sealing method builds on existing secure time-stamping methods.

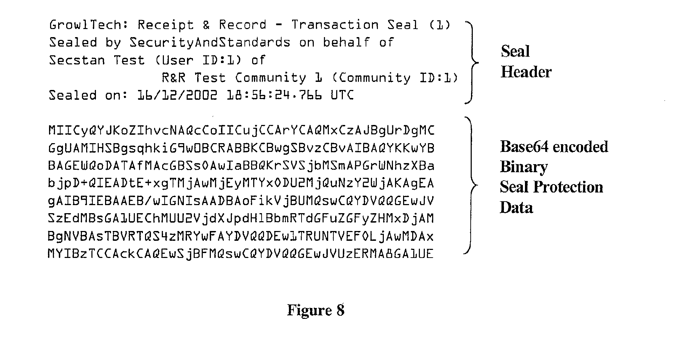

A method of encoding a seal provides a text string containing a descriptive header and binary protection data encoded in Base64 as defined in Internet RFC 2045. The header includes information on: the identity of the sealing authority, the originator's identity (system security identity and business identity) and the time of the transaction. The binary protection data includes binary encoding of the sealing authorities digital signature against a hash of the transaction data with the originator's identity and the time of the transaction. An example of a text string encoding is given in Figure 8. An alternative encoding is to encode the data as described above in XML as defined in World Wide Web Consortium (W3C) specification Extensible Markup Language (XML) (reference http://www.w3.org/TR/REC-xml).

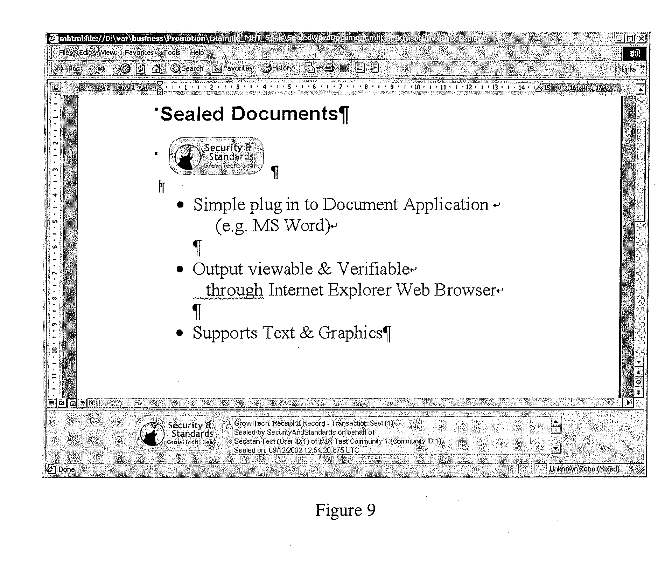

A method of encoding the transaction data with the seal uses the encoding defined in Internet RFC 2045 to RFC 2049 (commonly called MIME) combined with code for viewing hypertext in multiple frames such as defined in the World Wide Web Consortium (W3C) HTML 4.01 Specification (reference: http://www.w3.org/TR/htm14/). The seal itself, encoded as described above, is shown in one frame as a text string, only the header need be immediately visible. The sealed document is in the other frame or frames. This enables sealed documents, including documents incorporating text, images, voice or video, to be viewed through any suitably MIME enabled Web Browser. An example of a sealed document is given in Figure 9.

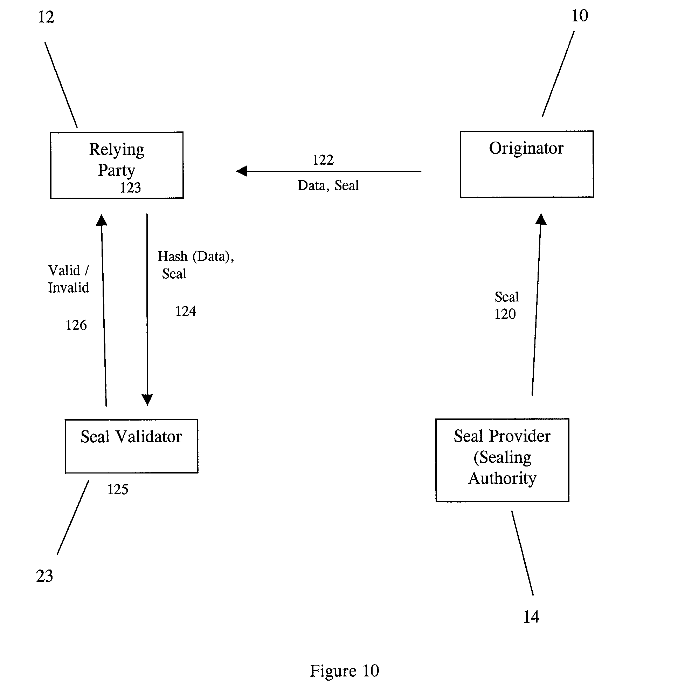

Referring to Figure 10, an embodiment of routine illustrating how a trusted agent may be used to validate a seal is shown. At step 120 the seal provider 14 issues a seal to the originator 10, which in turn, at step 122, provides the data and seal to the relying party 12. At step 124 the relying party 12 forwards the hash of the data together with the seal to a seal validator 23 which, at step 125, determines whether the seal is valid. At step 126 the seal validator 23 returns to the relying party 12 a valid/invalid reply.

The embodiments described above provide a number of features for the creation of a secure seal for subsequent use. First, the seal protects the authenticity of a data such as a document or transaction. This protection applies to the data both when communicated between systems and in storage. The seal can be applied to a hash of data along with the time and authenticated identity of the data originator. The authenticity is certified using, for example, the digital signature of the seal provider.

The seal provides long term authenticity of the data and in a form which cannot be repudiated, for example by claiming compromise of authentication keys subsequent to the seal being applied. Thus, a seal is provided which establishes the authenticity of the parties and seals the transaction data in a manner which maintains its integrity over time. A copy of the seal can be kept by the seal provider in an audit log to provide further proof of authenticity. As the seal only contains a hash of the data being sealed, from which the original data cannot be re-created, the privacy of the data is maintained.

The seal can be used by the originator and any other party relying on the authenticity of data to validate its authenticity. Any party that trusts the seal provider and has a means of authenticating the seal (e.g. using the seal providers public key) can verify the validity of the seal. The hash value within the seal can be checked against a recalculated hash value to check that the seal applies to the given data and that the data has been unchanged. Further assurance of the validity of a seal can be achieved by requesting a copy of the seal from the seal provider's audit log.

In this embodiment, once a transaction record and receipt (seal) has been generated, as well as the seal to the appropriate party, a copy is saved at the seal provider or at a secure location controlled by the seal provider.

In some embodiments, such as those involving a transaction sequence a seal can be applied to each stage of the transaction proving the timing sequence of the transactions. For example, in a transaction involving an offer and an acceptance, data relating to the offer and also to the acceptance can be each be sealed proving the time relationship between the offer and acceptance. This can, for example, have particular application in trading in shares.

It is also envisaged that in some embodiments the generation of the seal also stores data relating to a single event. For example, the event might be the creation of documents or data by an identified originator at a given time. The seal, therefore, would provide evidence of that event.

Thus, in the preferred embodiments, the seal is issued by a trusted authority (the seal provider) which authenticates the document originator, provides proof of time of creation of the document linked to a hash code representing the document and is protected by a cryptographic code which proves the authenticity of the seal and which can detect any changes in the sealed information. The seal, along with the data it authenticates, can be sent to any party relying on the authenticity of that data.

In this regard, a seal can be checked for validity by the relying party or an agent trusted by the relying party to validate seals (seal validator). As shown in figure 10, the trusted agent can be used to validate a seal simply by forwarding the seal and a recalculated hash of the data to that party (124). This can be initiated, for example, by the relying party clicking on a button or icon displayed as part of the seal. If the seal validator knows and trusts the sealing authority and has the key necessary to verify the cryptographic code (e.g. the sealing authority's public key) it can check the validity of the seal and confirm that the hash in the seal matches that recalculated by the relying party. If the seal is valid and the data hash is the same, the validator would respond by indicating that the sealed document provided by the relying party is valid (126). On the other hand, if there has been any change in the seal, the cryptographic code was not created a trusted sealing authority or the hash in the seal does not match the recalculated hash, the seal provider would indicate that that seal has become invalid.

Thus, the preferred embodiment can provide a seal which is a form of certificate specific to each transaction which incorporates attributes. This seal certifies the user's signing key, as well as providing a time stamp for relating to the transaction or event. This seal provides a form of certificate which is bound to the transaction, i.e. is transaction specific.

The seals can also be used for voice and video data and indeed can be applied to any digitised media such as web pages, video files, audio files, digital photographs and so on. In the preferred embodiment, the seals are simple to view and verify using, for example, an Internet browsing software. Furthermore, the seals can enable disputes to be resolved quickly, saving time and money. It can also protect all parties against denial of the existence or content of a document or event and can provide evidence of a transaction or data when the information is contested, even years after the event.

Three variations of the sealing method have been described, one using originator authentication, the second adding originator digital signatures, the third adding public keys certified to be valid at the time of the transaction. Further variations of the sealing methods are envisaged for alternative transaction environments including but not limited to e-mail, requests passed via transaction peers and transaction data passing through the seal provider.

There is also described a method for registration that applies the sealing method to the registration of a business identity between business partners. The registration method can be used as an alternative to existing electronic certification methods. The registration method enables alternative business related registrations to be applied to the same entity for different business applications.

## Claims

1. A sealing method for sealing the details of an electronic transaction or data including the step of obtaining authentication information from an originator (10), checking the validity of that originator's authentication at the time of sealing and creating a sealed record related to the transaction or data and validity of the originator's authentication information.

2. A method according to claim 1, wherein the sealed record includes details of the originator (10) of the transaction or data and the time of sealing.

3. A method according to claim 1 or 2, including the step of digitally signing the seal.

4. A method according to claim 3, wherein the step of digitally signing the seal is carried out by a trusted seal provider (14).

5. A method according to claim 4, wherein the transaction data or other data itself is not revealed to the seal provider (14).

6. A method according to any preceding claim, wherein a one-way mathematical function of the transaction data, and not the data itself, is revealed to the seal provider (14).

7. A method according to any preceding claim, including the step of storing a copy of the data forming the seal into an audit log file held remotely from parties to the transaction or involved in the data.

8. A method according to any preceding claim, wherein the seal is passed to a relying party (12) directly or indirectly.

9. A method according to any preceding claim, including the step of providing for checking of a seal, and that it belongs to data which is identical to that to which the seal was originally applied, by a relying party (12) or an agent trusted by the relying party (12).

10. A method according to any preceding claim, including the steps of:
the originator (10) digitally signing a transaction data or other data,
creating a hash value or other one-way representation of said data;
transmitting the hash value or other one-way representation, a digital signature and a seal request to the or a seal provider through a secure channel which authenticates the originator (10) to the seal provider (14);
providing for the seal provider (14) to determine whether the authentication of the request is correct and whether the digital signature is currently valid and if so creating a seal.

11. A method according to claim 10, wherein the seal contains: an identifier for the originator (10), the time of the request, the hash value or other one-way representation, by the originator (10), and at least one digital signature or other authentication of the seal as coming from the seal provider (14).

12. A method according to claim 11, wherein the seal also contains a digital signature provided by the originator (10) which has been checked by the seal provider (14).

13. A method according to any preceding claim, wherein the originator is a transaction peer (15).

14. A system for providing a seal sealing the details of an electronic transaction or data including means for obtaining authentication information from an originator (10), means for checking the validity of that originator's authentication at the time of sealing and means for creating a sealed record related to the transaction or data and validity of the originator's authentication information.
